# EUROPEAN PATENT APPLICATION

(11) **EP 4 570 859 A1**
(43) Date of publication of application: **18.06.2025**
(21) Application number: 24823748.9
(22) Date of filing: 14.06.2024
(51) Int. Cl.: C08L 69/00

(54) **POLYCARBONATE RESIN COMPOSITION**

(30) Priority: 16.06.2023 KR 20230077613
(71) Applicant: LG Chem, Ltd., Seoul 07336 (KR)
(72) Inventor: JEONG, Jaeeon, Daejeon 34122 (KR); LEE, Dayoung, Daejeon 34122 (KR); BAHN, Hyong Min, Daejeon 34122 (KR); YU, Yeji, Daejeon 34122 (KR)
(74) Representative: Goddar, Heinz J.
(86) International application number: PCT/KR2024/008227
(87) International publication number: WO 2024/258231

(57) **Abstract**

The present invention is characterized in that optical properties, particularly, a transmittance of long-wavelength light and a yellowness index of long-wavelength light of a polycarbonate resin may be improved by using an additive having a specific structure in the polycarbonate resin.

## Description

### [Technical Field]

### Cross-reference to Related Application

The present application is based on, and claims priority from, Korean Patent Application No. 10-2023-0077613, filed on June 16, 2023, the disclosure of which is hereby incorporated by reference herein in its entirety.

The present invention relates to a polycarbonate resin composition with excellent optical properties, particularly, a transmittance of long-wavelength light and a yellowness index of long-wavelength light.

### [Background Art]

Polycarbonate resin is known as a resin with excellent impact resistance, transparency, strength, flame retardancy, electrical properties, and heat resistance, and is widely used in the manufacture of molded articles for electrical/electronic products, including automobiles, and its demand is growing daily.

As the application fields of the polycarbonate resin have recently expanded, its demand is also increasing in fields that require high optical properties, such as light guide plates, automobile lamps, automobile DRLs, general lamps, lenses, etc. Accordingly, there is a need to develop a resin with a high transmittance and a low YI, as compared to existing polycarbonate resins.

Traditionally, the use of phenol-based compounds or phosphorus-based compounds has been proposed to ensure thermal stability to retain physical properties even during high-temperature processing of the polycarbonate resin. However, there is a limitation in improving the transmittance, particularly, the transmittance of long-wavelength light and the yellowness index of long-wavelength light, only through the use thereof.

Meanwhile, even though various additives have been studied to further improve the same, compatibility with the polycarbonate resin must also be considerably considered in order to improve the optical properties of the polycarbonate resin, to improve the optical properties by using additives.

Accordingly, in the present invention, extensive research has been conducted to improve the optical properties of polycarbonate resin, particularly, the transmittance of long-wavelength light and the yellowness index of long-wavelength light, through various additives, and as a result, it was found that when an additive with a specific structure is used as described below, the above object may be achieved, thereby completing the present invention.

### [Disclosure]

### [Technical Problem]

There is provided a polycarbonate resin composition with excellent transmittance of long-wavelength light and yellowness index of long-wavelength light.

There is also provided a method of preparing the polycarbonate resin composition.

### [Technical Solution]

To achieve the above objects, there is provided a polycarbonate resin composition as follows:
the polycarbonate resin composition including
a polycarbonate resin; and
a polycarbonatediol represented by the following Chemical Formula 1: 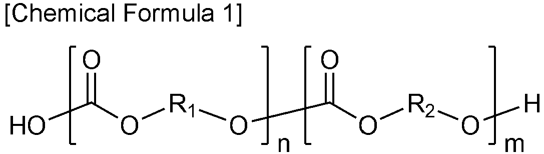
wherein in Chemical Formula 1,
R₁ and R₂ are each independently C₅~C₁₀ linear alkylene, or C₅~C₁₀ cycloalkylene, and
n and m are each independently an integer of 1 or more.

As used herein, the term 'polycarbonate resin' refers to a polymer produced by reacting a diphenolic compound, a phosgene, a carbonic acid ester, or a combination thereof. Polycarbonate is extremely excellent in heat resistance, impact resistance, mechanical strength, transparency, etc., and thus is widely used in the production of transparent sheets, packaging materials, automobile bumpers, ultraviolet blocking films, etc. Particularly, in the present invention, polycarbonate is used as an optical material.

The diphenolic compound may include hydroquinone, resorcinol, 4,4'-dihydroxydiphenyl, 2,2-bis(4-hydroxyphenyl)propane ('bisphenol-A'), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, etc. Preferably, 4,4'-dihydroxydiphenyl, 2,2-bis(4-hydroxyphenyl)propane may be used. In this case, the structure of the polycarbonate is as in Chemical Formula 2 below:

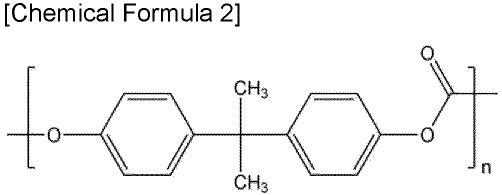

The polycarbonate may be a mixture of copolymers prepared from two or more kinds of diphenols. In addition, as the polycarbonate, a linear polycarbonate, a branched polycarbonate, a polyester carbonate copolymer resin, etc. may be used.

The linear polycarbonate may include polycarbonate, etc. prepared from bisphenol-A. The branched polycarbonates may be those prepared by reacting a polyfunctional aromatic compound, such as trimellitic anhydride, trimellitic acid, etc., with a diphenol and a carbonate. The polyfunctional aromatic compound may be included in an amount of 0.05 mol% to 2 mol%, based on the total amount of the branched polycarbonate. The polyester carbonate copolymer resin may include those prepared by reacting a bifunctional carboxylic acid with a diphenol and a carbonate. As the carbonate, diaryl carbonate such as diphenyl carbonate, etc., ethylene carbonate, etc. may be used.

Preferably, the polycarbonate has a weight average molecular weight of 14,000 g/mol to 50,000 g/mol. More preferably, the polycarbonate has a weight average molecular weight of 15,000 g/mol or more, 16,000 g/mol or more, 17,000 g/mol or more, 18,000 g/mol or more, 19,000 g/mol or more, 20,000 g/mol or more; 45,000 g/mol or less, 40,000 g/mol or less, 35,000 g/mol or less, 30,000 g/mol or less, or 25,000 g/mol or less.

Meanwhile, the polycarbonatediol, represented by Chemical Formula 1, which is included in the composition of the present invention, is a substance added to improve the optical properties of the polycarbonate resin.

In particular, since the polycarbonatediol according to the present invention has a carbonate structure in its molecular structure, it has excellent compatibility with the polycarbonate resin, thereby more effectively improving the optical properties of the polycarbonate resin.

Meanwhile, the polycarbonatediol according to the present invention includes two kinds of repeating units and is a random copolymer. Preferably, a molar ratio of the repeating units in the polycarbonatediol is 1:9 to 9:1. In other words, in Chemical Formula 1, n:m is preferably 1:9 to 9:1. More preferably, in Chemical Formula 1, n:m is 1:8 to 8:1, 1:7 to 7:1, 1:6 to 6:1, 1:5 to 5:1, 1:4 to 4:1, 1:3 to 3:1, or 1:2 to 2:1.

Preferably, R₁ and R₂ are different from each other. Preferably, any one of R₁ and R₂ is linear hexanediyl, and the other is linear pentanediyl.

Preferably, the polycarbonatediol is included in an amount of 0.005 parts by weight to 5.0 parts by weight with respect to 100 parts by weight of the polycarbonate resin. When the content is less than 0.005 parts by weight, the effect according to addition of the polycarbonatediol is poor, and when the content is more than 5.0 parts by weight, it is apprehended that the original physical properties of the polycarbonate resin may deteriorate. More preferably, the polycarbonatediol is included in an amount of 0.01 part by weight or more, 0.02 parts by weight or more, 0.03 parts by weight or more, 0.04 parts by weight or more, 0.05 parts by weight or more, 0.06 parts by weight or more, 0.07 parts by weight or more, 0.08 parts by weight or more, 0.09 parts by weight or more, or 0.1 part by weight or more; and 4.0 parts by weight or less, 3.0 parts by weight or less, 2.0 parts by weight or less, or 1.0 part by weight or less with respect to 100 parts by weight of the polycarbonate resin.

Preferably, the polycarbonatediol has a weight average molecular weight of 300 g/mol to 3,000 g/mol. More preferably, the polycarbonatediol has a weight average molecular weight of 400 g/mol or more, or 500 g/mol or more; and 2,900 g/mol or less, 2,800 g/mol or less, 2,700 g/mol or less, 2,600 g/mol or less, 2,500 g/mol or less, 2,400 g/mol or less, 2,300 g/mol or less, 2,200 g/mol or less, 2,100 g/mol or less, or 2,000 g/mol or less.

Meanwhile, the polycarbonate resin composition according to the present invention may further include an antioxidant, as needed. The antioxidant may play a role in maintaining the physical properties of the polycarbonate resin, particularly, during high-temperature processing.

The antioxidant is not limited as long as it is used in the polycarbonate resin, and for example, phosphorus-based compounds or phenol-based compounds may be used. Representative examples may include any one or more selected from the group consisting of PEP-36 (bis(2,6-di-tert-butyl-4-methylphenyl)pentaerythritoldiphosphite) and DP9228 (bis(2,4-dicumylphenyl)pentaerythritol diphosphate). Further, example of the hindered phenolic antioxidant may include IR1010 ([3-[3-(4-hydroxy3,5-ditert-butylphenyl)propanoyloxy]-2,2-bis[3-(4-hydroxy-3,5-ditert-butylphenyl)propanoyloxymethyl]propyl] 3-(4-hydroxy-3,5-ditert-butylphenyl)propanoate). Further, as the antioxidant, only one type may be used, or two or more types may be used. When two or more types of antioxidants are used, a weight ratio between the antioxidants is 1:15 to 15:1.

Preferably, the antioxidant is included in an amount of 0.005 parts by weight to 5.0 parts by weight with respect to 100 parts by weight of the polycarbonate resin. When the content is less than 0.005 parts by weight, the effect according to addition of the antioxidant is poor, and when the content is more than 5.0 parts by weight, it is apprehended that the original physical properties of the antioxidant resin may deteriorate. More preferably, the antioxidant is included in an amount of 0.01 part by weight or more, 0.02 parts by weight or more, 0.03 parts by weight or more, 0.04 parts by weight or more, 0.05 parts by weight or more, 0.06 parts by weight or more, 0.07 parts by weight or more, 0.08 parts by weight or more, 0.09 parts by weight or more, or 0.1 part by weight or more; and 4.0 parts by weight or less, 3.0 parts by weight or less, 2.0 parts by weight or less, or 1.0 part by weight or less with respect to 100 parts by weight of the polycarbonate resin.

In addition, the polycarbonate resin composition according to the present invention may further include, as needed, any one or more selected from the group consisting of heat stabilizers, light stabilizers, plasticizers, antistatic agents, nucleating agents, flame retardants, lubricants, impact modifiers, fluorescent whitening agents, ultraviolet absorbers, pigments, and dyes.

Preferably, the polycarbonate resin composition according to the present invention has a transmittance of long-wavelength light of 85.0% or more. A method of measuring the transmittance of long-wavelength light will be specified in Example described later. More preferably, the polycarbonate resin composition according to the present invention has a transmittance of long-wavelength light of 85.1% or more, 85.2% or more, 85.3% or more, 85.4% or more, or 85.5% or more. Meanwhile, the theoretical upper limit of the transmittance of long-wavelength light is 100%. However, for example, the polycarbonate resin composition according to the present invention has a transmittance of long-wavelength light of 95% or less, 94% or less, 93% or less, 92% or less, 91% or less, or 90% or less.

Preferably, the polycarbonate resin composition according to the present invention has a YI (yellowness index) of long-wavelength light of 5.30 or less. A method of measuring the YI of long-wavelength light will be specified in Example described later. More preferably, the polycarbonate resin composition according to the present invention has a YI of long-wavelength light of 5.25 or less, 5.20 or less, 5.19 or less, 5.18 or less, 5.17 or less, 5.16 or less, 5.15 or less, 5.14 or less, 5.13 or less, 5.12 or less, 5.11 or less, or 5.10 or less. Further, the polycarbonate resin composition according to the present invention has a YI of long-wavelength light of 5.00 or more, 5.01 or more, 5.02 or more, 5.03 or more, 5.04 or more, or 5.05 or more.

Further, the present invention provides an article including the polycarbonate resin composition. Preferably, the article is an extrusion-molded article or an injection-molded article.

A method of manufacturing the article may include the steps of mixing the polycarbonate resin composition according to the present invention and the above-described additives using a mixer, as needed, extrusion-molding the mixture using an extruder to produce pellets, drying the pellets, and then injecting the same using an injection molding machine.

### [Effect of the Invention]

As described above, the polycarbonate resin composition according to the present invention is characterized by excellent optical properties, particularly, excellent transmittance of long-wavelength light and yellowness index of long-wavelength light.

### [Detailed Description of the Embodiments]

Hereinafter, exemplary embodiments of the present invention will be described in more detail in the following Examples. However, the following Examples are only for illustrating the exemplary embodiments of the present invention, and accordingly, the content of the present invention is not limited by the following Examples.

In Examples and Comparative Examples below, the following materials were used.

### (A): Polycarbonate resin

LUPOY PC 1300-30-NP (bisphenol A type polycarbonate resin, manufacturer: LG chemical, weight average molecular weight (Mw): 21,100 g/mol (measured by GPC with PC Standard using Agilent 1200 series)) was used.

### (B): Polycarbonatediol

(B1): Duranol T5650E (manufacturer: Asahi Kasei, number average molecular weight (Mn): 500 g/mol, polycarbonatediol represented by Chemical Formula 1, wherein any one of R₁ and R₂ is linear hexanediyl and the other is linear pentanediyl)
(B2): Duranol T5651 (manufacturer: Asahi Kasei, number average molecular weight (Mn): 1,000 g/mol, polycarbonatediol represented by Chemical Formula 1, wherein any one of R₁ and R₂ is linear hexanediyl and the other is linear pentanediyl)
(B3) Duranol T5652 (manufacturer: Asahi Kasei, number average molecular weight (Mn): 2,000 g/mol, polycarbonatediol represented by Chemical Formula 1, wherein any one of R₁ and R₂ is linear hexanediyl and the other is linear pentanediyl)
(B4) Duranol G3452 (manufacturer: Asahi Kasei, number average molecular weight (Mn): 2,000 g/mol, polycarbonatediol represented by Chemical Formula 1, wherein any one of R₁ and R₂ is linear propanediyl and the other is linear butanediyl)

### (C): Polyalkylene glycol

(C1) Polycerin DCB-2000 (manufacturer: NOF Corporation, number average molecular weight (Mn): 2,000 g/mol)
(C2) KONIX PP-2000 (manufacturer: KPX chemical, number average molecular weight (Mn): 2,000 g/mol, polypropylene glycol)

### (D): Antioxidant

DP9228 (manufacturer: Dover Chemical Corporation, Cas No. 154862-43-8)

### (E) Antioxidant

IRGANOX^{®} 1010 (manufacturer: BASF, Cas No. 6683-19-8)

### Example 1

3,500 ppmw of Duranol T5650E (B1), 1,500 ppmw of DP9228 (D), and 500 ppmw of IRGANOX^{®} 1010 (E) were added, based on 100 parts by weight of LUPOY PC 1300-30-NP (A) which is a polycarbonate resin, and a polycarbonate resin composition was prepared using a twin-screw extruder (L/D = 36, Φ = 45, barrel temperature of 260°C) at a rate of 55 kg per hour.

### Examples 2 to 9

Each polycarbonate composition was prepared in the same manner as in Example 1, except that Duranol T5650E (B1) was used after being changed as shown in Table 1 below.

### Comparative Example 1

A polycarbonate composition was prepared in the same manner as in Example 1, except that 1,500 ppmw of DP9228 (D) and 500 ppmw of IRGANOX^{®} 1010 (E) were used, based on 100 parts by weight of LUPOY PC 1300-30-NP (A) which is a polycarbonate resin, as shown in Table 1 below.

### Comparative Examples 2, 3, and 4

Each polycarbonate composition was prepared in the same manner as in Example 1, except that materials shown in Table 1 below were used instead of Duranol T5650E (B1).

**[Table 1]**

| | Amount of use (ppmw)¹⁾ | | | | | | | |
|---|---|---|---|---|---|---|---|---|
| | Polycarbonatediol | | | | Polyalkylene glycol | | Antioxidant | |
| | (B1) | (B2) | (B3) | (B4) | (C1) | (C2) | (D) | (E) |
| Example 1 | 1,500 | 0 | 0 | 0 | 0 | 0 | 1,500 | 500 |
| Example 2 | 3,500 | 0 | 0 | 0 | 0 | 0 | 1,500 | 500 |
| Example 3 | 5,500 | 0 | 0 | 0 | 0 | 0 | 1,500 | 500 |
| Example 4 | 0 | 1,500 | 0 | 0 | 0 | 0 | 1,500 | 500 |
| Example 5 | 0 | 3,500 | 0 | 0 | 0 | 0 | 1,500 | 500 |
| Example 6 | 0 | 5,500 | 0 | 0 | 0 | 0 | 1,500 | 500 |
| Example 7 | 0 | 0 | 1,500 | 0 | 0 | 0 | 1,500 | 500 |
| Example 8 | 0 | 0 | 3,500 | 0 | 0 | 0 | 1,500 | 500 |
| Example 9 | 0 | 0 | 5,500 | 0 | 0 | 0 | 1,500 | 500 |
| Comparative Example 1 | 0 | 0 | 0 | 0 | 0 | 0 | 1,500 | 500 |
| Comparative Example 2 | 0 | 0 | 0 | 3,500 | 0 | 0 | 1,500 | 500 |
| Comparative Example 3 | 0 | 0 | 0 | 0 | 3,500 | 0 | 1,500 | 500 |
| Comparative Example 4 | 0 | 0 | 0 | 0 | 0 | 3,500 | 1,500 | 500 |
| 1) ppmw refers to a weight ratio with respect to a polycarbonate resin LUPOY PC 1300-30-NP (A). | | | | | | | | |

### Experimental Example

Physical properties of the polycarbonate compositions prepared in Examples and Comparative Examples were evaluated as follows.

### (1) 3T transmittance, 3T YI (280°C)

Each of the resin pellets prepared in Examples and Comparative Examples was manufactured into a specimen for measurement which is a rectangular specimen (3T injection-molded specimen) with a thickness of 3 mm and a flat scale of 30*50 mm using an N-20C injection molding machine of JSW Co., Ltd., and at this time, the barrel temperature of the injection molding machine was 280°C. In accordance with ASTM D1003, a transmittance at 420 nm was measured using UltraScan PRO which is a Hunter lab's equipment under transmission conditions of 350 nm to 850 nm. In addition, a yellowness index was measured using UltraScan PRO which is a Hunter lab's equipment under transmission conditions of 350 nm to 1050 nm in accordance with ASTM D1925.

### (2) 150T transmittance of long-wavelength light, 150T YI

Each of the resin pellets prepared in Examples and Comparative Examples was manufactured into a specimen for measurement which is a rectangular specimen (4T injection-molded specimen) with a thickness of 4 mm and a flat scale of 150*80 mm using an N-20C injection molding machine of JSW Co., Ltd., and at this time, the barrel temperature of the injection molding machine was 280°C. A transmittance (T%) of long-wavelength light and a yellowness index (YI) of long-wavelength light were measured by irradiating light of 380 nm to 780 nm along the horizontal direction of the specimen using a spectrophotometer U-4100 which is a Hitachi's equipment. The yellowness index of long-wavelength light was measured in accordance with JIS Z 8722.

### (3) YI (3T, 280°C, 15 min)

Each of the resin pellets prepared in Examples and Comparative Examples was placed in a metering cylinder of the injection molding machine for 15 minutes using an N-20C injection molding machine of JSW Co., Ltd., and then a 3 mm-thick specimen with the same standard as the 3T YI (280°C) was continuously injection-molded three times to manufacture a specimen. At this time, the barrel temperature of the injection molding machine was 280°C. For the third injection-molded specimen among the injection-molded specimens, the YI value was measured in the same manner as the method of measuring 3T YI (280°C).

The results are shown in Table 2 below.

**[Table 2]**

| | Transmittance | 3T YI | Transmittance of long-wavelength light | YI of long-wavelength light | YI |
|---|---|---|---|---|---|
| | (3T, Tt%) | (3T, 280°C) | (150T, Tt%) | (150T) | (3T, 280°C, 15 min) |
| Example 1 | 91.30 | 0.62 | 84.50 | 5.27 | 0.90 |
| Example 2 | 91.50 | 0.62 | 85.10 | 5.14 | 0.81 |
| Example 3 | 91.40 | 0.62 | 84.60 | 5.24 | 0.84 |
| Example 4 | 91.20 | 0.60 | 84.70 | 5.25 | 0.88 |
| Example 5 | 91.60 | 0.61 | 85.60 | 5.12 | 0.83 |
| Example 6 | 91.40 | 0.62 | 85.10 | 5.21 | 0.86 |
| Example 7 | 91.30 | 0.61 | 84.90 | 5.19 | 0.88 |
| Example 8 | 91.60 | 0.60 | 85.80 | 5.07 | 0.82 |
| Example 9 | 91.50 | 0.60 | 85.10 | 5.17 | 0.84 |
| Comparative Example 1 | 91.20 | 0.61 | 83.40 | 5.53 | 0.94 |
| Comparative Example 2 | 91.40 | 0.62 | 85.10 | 5.23 | 0.87 |
| Comparative Example 3 | 91.30 | 0.63 | 84.60 | 5.32 | 0.91 |
| Comparative Example 4 | 91.20 | 0.62 | 84.90 | 5.48 | 0.90 |

As shown in Table 1, there is no significant difference in the 3T transmittance and 3T YI between Examples and Comparative Examples according to the present invention. However, Examples according to the present invention showed significantly superior results in the transmittance of long-wavelength light and the YI of long-wavelength light, as compared to Comparative Examples, indicating that the compositions according to the present invention have superior optical properties.

## Claims

1. A polycarbonate resin composition comprising:
a polycarbonate resin; and
a polycarbonatediol represented by the following Chemical Formula 1: 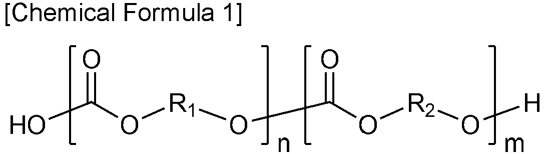
wherein in Chemical Formula 1,
R₁ and R₂ are each independently C₅~C₁₀ linear alkylene, or C₅~C₁₀ cycloalkylene, and
n and m are each independently an integer of 1 or more.

2. The polycarbonate resin composition of claim 1, wherein
a weight average molecular weight of the polycarbonate resin is 14,000 g/mol to 50,000 g/mol.

3. The polycarbonate resin composition of claim 1, wherein
the polycarbonatediol is a random copolymer.

4. The polycarbonate resin composition of claim 1, wherein
n:m is 1:9 to 9:1.

5. The polycarbonate resin composition of claim 1, wherein
R₁ and R₂ are different from each other.

6. The polycarbonate resin composition of claim 1, wherein
any one of R₁ and R₂ is linear hexanediyl, and the other is linear pentanediyl.

7. The polycarbonate resin composition of claim 1, wherein
a weight average molecular weight of the polycarbonatediol is 300 g/mol to 3,000 g/mol.

8. The polycarbonate resin composition of claim 1, wherein
the polycarbonatediol is included in an amount of 0.005 parts by weight to 5.0 parts by weight with respect to 100 parts by weight of the polycarbonate resin.

9. The polycarbonate resin composition of claim 1, wherein
the polycarbonatediol is included in an amount of 0.1 part by weight to 1.0 part by weight with respect to 100 parts by weight of the polycarbonate resin.

10. The polycarbonate resin composition of claim 1, wherein
the composition further comprises an antioxidant.

11. The polycarbonate resin composition of claim 10, wherein
the antioxidant is included in an amount of 0.005 parts by weight to 5.0 parts by weight with respect to 100 parts by weight of the polycarbonate resin.

12. An article comprising the composition of any one of claims 1 to 11.
